# EUROPÄISCHE PATENTANMELDUNG

(11) **EP 1 930 534 A2**
(43) Veröffentlichungstag der Anmeldung: **11.06.2008**
(21) Anmeldenummer: 07022998.4
(22) Anmeldetag: 28.11.2007
(51) Int. Cl.: E05D 7/10

(54) **Gelenkanordnung mit einer Clipsverbindung**

(30) Priorität: 04.12.2006 DE 102006057358
(71) Anmelder: Behr GmbH & Co. KG, 70469 Stuttgart (DE)
(72) Erfinder: Dietmeier, Rainer, 70736 Fellbach (DE); Marquardt, Jörg, 71272 Renningen (DE)

(57) **Zusammenfassung**

Die Erfindung betrifft eine Gelenkanordnung mit zwei um eine Schwenkachse (S2) gegeneinander verschwenkbaren Gelenkteilen, die mit mindestens einer Clipsverbindung miteinander verbunden sind, wobei die Clipsverbindung einen an einem Federarm (5) ausgebildeten Vorsprung (6), der Bestandteil des ersten Gelenkteils ist, und eine Öffnung (7), die Bestandteil des zweiten Gelenkteils ist, aufweist, und die Schwenkachse (S2) durch die Clipsverbindung verläuft, und am den Federarm (5) mit Vorsprung (6) ein Betätigungsmittel vorgesehen ist, über das der Federarm (5) elastisch und definiert bis zu einem Maximum verformbar ist.

## Beschreibung

Die Erfindung betrifft eine Gelenkanordnung mit einer Clipsverbindung gemäß dem Oberbegriff des Anspruches 1.

Aus der DE 699 20 797 T2 ist eine schwenkbare Computerzugangstürstruktur mit unsichtbarer und trennbarer Scharniervorrichtung bekannt, wobei diese Vorrichtung ein Gehäuse, das eine Wandöffnung darin hat, eine Zugangstür, einen ersten und einen zweiten Gelenkbereich aufweist. Die Gelenkbereiche sind jeweils getragen durch die Zugangstür und das Gehäuse, und lösbar an Schwenkstellen, die entlang einer Schwenkachse beabstandet sind, miteinander in Eingriff gebracht, wobei der erste und der zweite Gelenkbereich die Zugangstür für eine Schwenkbewegung relativ zu dem Gehäuse um die Schwenkachse, zwischen einer geschlossenen Position und einer offenen Grenzposition, in der die Zugangstür jeweils die Wandöffnung abdeckt bzw. freigibt, hält. Hierbei ist eine Trennstruktur vorgesehen, die versetzt zu den Schwenkstellen ist, und eine Nockenfläche aufweist, die so arbeitet, um den ersten und den zweiten Gelenkbereich durch Verschieben mindestens eines der Gelenkbereiche entlang der Schwenkachse zu lösen, um dadurch die Zugangstür von dem Gehäuse in Abhängigkeit einer erzwungenen Schwenkung der Zugangstür nach außen über die offene Grenzposition hinaus freizugeben. Eine derartige Gelenkanordnung lässt jedoch noch Wünsche offen.

Ausgehend von diesem Stand der Technik ist es Aufgabe der Erfindung, eine verbesserte Gelenkanordnung zur Verfügung zu stellen. Diese Aufgabe wird gelöst durch eine Gelenkanordnung mit den Merkmalen des Anspruchs 1. Vorteilhafte Ausführungen sind Gegenstand der Unteransprüche.

Erfindungsgemäß ist eine Gelenkanordnung mit zwei um eine Schwenkachse gegeneinander verschwenkbaren Gelenkteilen vorgesehen, die mit mindestens einer Clipsverbindung miteinander verbunden sind, wobei die Clipsverbindung einen an einem Federarm ausgebildeten Vorsprung, der Bestandteil des ersten Gelenkteils ist, und eine Öffnung, die Bestandteil des zweiten Gelenkteils ist, aufweist, und die Schwenkachse durch die Clipsverbindung verläuft. Hierbei ist am den Federarm mit besagtem Vorsprung ein Betätigungsmittel vorgesehen, über das der Federarm elastisch und definiert bis zu einem Maximum verformbar ist. Dies ermöglicht eine definierte elastische Verformung des Federarms, so dass eine problemlose Montage ohne Beschädigungen des Federarms, sowie eine wiederholte Demontage der Gelenkteile möglich ist.

Bevorzugt wird das Betätigungsmittel durch einen zweiten Vorsprung gebildet. Dieser Vorsprung steht in einer Richtung über den Federarm über, insbesondere bevorzugt in gleicher Richtung wie der erste Vorsprung, der Teil der Clipsverbindung ist.

Besonders bevorzugt ist der zweite Vorsprung durch eine Welle oder Sicke mit im Wesentlichen konstanter oder verringerter Materialdicke als in den benachbarten Bereichen des Federarms gebildet. Eine derartige Welle oder Sicke ist einfach auszubilden und ermöglicht auf sehr einfache Weise eine Betätigung des Federarms - sei es von Hand oder mit Hilfe eines einen Druck ausübenden Werkzeugs.

Vorzugsweise ist eine Überlastungssicherung zum Verhindern einer Überlastung des Federarms vorgesehen. Diese Überlastungssicherung wird bevorzugt durch einen Anschlag gebildet, welcher die maximale Verformung des Federarms begrenzt. Durch das Vorsehen der Überlastungssicherung ist sowohl eine vollautomatische Montage als auch eine Montage von Hand, ggf. mit Hilfe eines entsprechenden Werkzeugs, möglich, bei der eine Beschädigung des Federarms und somit der Gelenkanordnung sicher vermieden werden kann.

Die Überlastungssicherung ist besonders bevorzugt durch einen neben dem Federarm angeordneten Bereich gebildet, der während einer Betätigung des Betätigungsmittels nicht oder nur unwesentlich verformt wird. Hierbei weist dieser Bereich bevorzugt eine erhöhte Steifigkeit entgegen der Kraftwirkungsrichtung der den Federarm verformenden Kraft auf.

Besonders bevorzugt ist die Überlastungssicherung durch eine Wand gebildet, die in einer Ebene um den Federarm außen herum verlaufend ausgebildet ist, insbesondere bevorzugt U-förmig ausgebildet ist.

Vorzugsweise ist auf zumindest einer Seite des Federarms der Clipsverbindung eine Wand am gleichen Gelenkteil ausgebildet, welche über einen wesentlichen Teil der Länge des Federarms parallel zum Federarm verläuft, wobei der Vorsprung in Eingriffsrichtung über die Wand hinausragt.

Besonders bevorzugt ist als Überlastungssicherung am Federarm auf der gleichen Seite und beabstandet vom Vorsprung der Clipsverbindung ein zweiter Vorsprung ausgebildet, der über die Wand hinausragt. Hierbei ist der Überstand vorzugsweise derart ausgelegt, dass der zweite Vorsprung des Federarms bei einer Verformung des Federarms, um die Clipsverbindung zu lösen (oder ggf. auch zu schließen), der Bereich des zweiten Vorsprungs etwa in gleicher Höhe wie die benachbarte Wand angeordnet ist, so dass der Federarm nicht überlastet wird, insbesondere nicht plastisch verformt wird.

Insbesondere bevorzugt ist beidseitig des Federarms eine Wand angeordnet, um eine Überlastung zu vermeiden. Die beiden Wände sind besonders bevorzugt im Bereich ihrer Enden miteinander verbunden, insbesondere in einer U-Form, wobei die Schwenkachse der Gelenkanordnung durch einen von den Wänden umschlossenen Bereich verläuft.

Besonders bevorzugt weist die Wand eine konstante Breite und Dicke auf. Hierbei ist die Biegesteifigkeit in Betätigungsrichtung des Federarms bevorzugt erhöht, d.h. die Höhe der Wand in Eingriffsrichtung des Vorsprungs ist deutlich größer als die Dicke der Wand in Querrichtung hierzu.

Um den Zusammenbau zu erleichtern ist vorzugsweise in Zusammenbaurichtung vor der Öffnung eine Einführschräge ausgebildet, so dass die Eintrittsöffnung für den Federarm vergrößert ist, wodurch sich die Montage vereinfacht.

Bevorzugt ist die Öffnung in einer Wand ausgebildet ist, deren Ende die Einführschräge bildet. Besonders bevorzugt ist der Wand mit der Öffnung gegenüberliegend eine zweite Wand ausgebildet, die zumindest bereichsweise parallel zur ersten Wand mit der Einführschräge verläuft.

Die Einführschräge weist vorzugsweise einen Winkel von 10° bis 45°, bevorzugt von 20° bis 40°, insbesondere bevorzugt von ca. 30°, zur Wand auf.

Bevorzugt ist die Einführschräge so lang ausgebildet, dass ihr Ende über den Vorsprung hinausragt, und dass die Wand, an der die Einführschräge ausgebildet ist, eine seitliche Führungsfläche bildet, welche die Positionierung vereinfacht.

Der erste Vorsprung, welcher Teil der Clipsverbindung ist, ist bevorzugt als zylindrischer Zapfen ausgebildet. Hierbei verläuft bevorzugt die Schwenkachse, um welche die beiden Gelenkteile relativ zueinander verschwenkbar sind, mittig durch den Zapfen.

Vorzugsweise sind mindestens zwei Clipsverbindungen vorgesehen, durch welche die Schwenkachse verläuft. Insbesondere bevorzugt sind die Clipsverbindungen spiegelbildlich bezüglich der Mittelquerebene ausgebildet, die senkrecht zur Schwenkachse angeordnet ist.

Die Gelenkanordnung ist vorzugsweise durch zwei Kunststoff-Spritzgussteile gebildet, jedoch kommen auch andere Materialien oder eine Paarung unterschiedlicher Materialien in Frage, wobei zumindest der Federarm aus einem ausreichend elastisch verformbaren Material bestehen muss, das Gelenkteil, in welchem die Öffnung vorgesehen ist, muss jedoch eine ausreichende Festigkeit aufweisen, um eine verlässliche Schwenkbewegung zu ermöglichen. Die einzelnen Gelenkteile können auch aus unterschiedlichen Materialien gebildet sein, bspw. kann ein Metall bereichsweise von Kunststoff umspritzt sein.

Besonders bevorzugt handelt es sich bei dem einen Gelenkteil um eine Klappe, insbesondere für eine Heizungs- und/oder Klimaanlage, und beim anderen Gelenkteil um einen Hebelarm eines Hebels, an welchem der Federarm ausgebildet ist.

Im Folgenden wird die Erfindung anhand eines Ausführungsbeispiels unter Bezugnahme auf die Zeichnung im Einzelnen erläutert. Es zeigen:
- Fig. 1: einen Schnitt durch zwei Gelenkanordnungen gemäß dem ersten Ausführungsbeispiel,
- Fig. 2: eine Detailansicht der oberen Gelenkanordnung von Fig. 1,
- Fig.3: eine perspektivische Darstellung der Gelenkanordnungen von Fig. 1, und
- Fig.4: eine perspektivische Detailansicht der oberen Gelenkanordnung von Fig. 1.

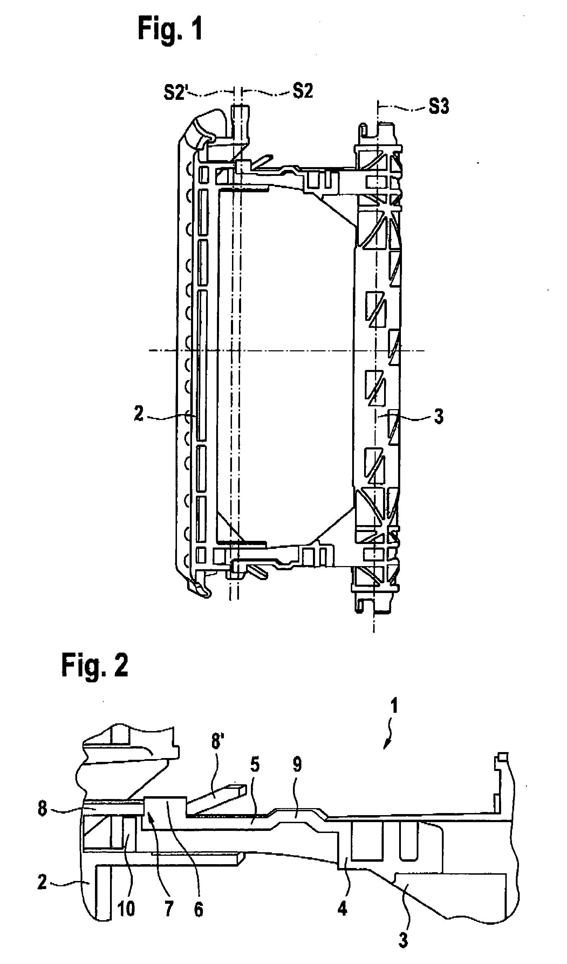

Eine Gelenkanordnung 1 zwischen einer Klappe 2 (erstes Gelenkteil) und einem Hebel 3 (zweites Gelenkteil) für die Regelung eines Luftstroms in einer Kraftfahrzeug-Klimaanlage ist lösbar in Form einer Clipsverbindung ausgebildet. Vorliegend sind zwei derartige Clipsverbindungen spiegelbildlich bezüglich einer Mittelquerebene, die in Fig. 1 durch eine Strich-Punkt-Linie angedeutet ist, der Klappe 2 vorgesehen, so dass vorliegend am oberen und am unteren Ende der Klappe 2 auf einer Seite derselben jeweils eine Clipsverbindung vorgesehen ist, die gemeinsam die Gelenkanordnung 1 bilden.

Die Klappe 2 weist zwei Schwenkachsen S2 und S2' auf, um die sie relativ zu benachbarten Bauteilen verschwenkbar ist, nämlich eine erste Schwenkachse S2, die durch die Clipsverbindungen verläuft, und eine zweite Schwenkachse S2', die durch auf der anderen Seite der Klappe 2 oben und unten vorgesehene Zapfen verläuft, welche als Kulissen dienen und in Kurvenbahnen von Kurvenscheiben (nicht dargestellt) geführt sind.

Der Hebel 3 weist einen als Hebelschwenkachse S3 dienenden, wellenartigen Bereich und zwei parallel zueinander verlaufende Hebelarme 4 auf, durch deren Endbereich die Schwenkachse S2 der Klappe 2 verläuft.

In Folge des spiegelbildlichen Aufbaus der Clipsverbindungen wird im Folgenden nur auf die in Fig. 1 oben und in Fig. 2 im Detail dargestellte Clipsverbindung näher eingegangen. Die Clipsverbindung weist einen am Hebel 3 ausgebildeten Federarm 5 mit einem Vorsprung 6 auf, der nach außen, also weg von der anderen Clipsverbindung zeigt. Der zapfenartig ausgebildete Vorsprung 6, durch den die Schwenkachse S2 verläuft, ist in einer Öffnung 7 aufgenommen, die in einem Randbereich der Klappe 2 ausgebildet ist. Hierbei ist der Klappenbereich in der Nähe der Öffnung 7 derart ausgebildet, dass zwei parallel zur Mittelquerebene verlaufende Wände 8 vorgesehen sind. In der äußeren Wand 8 ist besagte Öffnung 7 ausgebildet. Die Wände 8 weisen einen Abstand auf, welcher etwas größer als die Höhe des Vorsprungs 6 samt Dicke des Federarms 5 ist, so dass das Ende des Federarms 5 zwischen die beiden Wände 8 eingeführt werden kann. Um das Einführen des Federarmendes zu erleichtern, ist die äußere Wand mit einer die Einführöffnung erweiternden Einführschräge 8' ausgebildet, welche direkt an der Öffnung 7 endet. Zum Einführen gleitet der Vorsprung 6 entlang der Einführschräge 8', wobei sich der Federarm 5 elastisch verformt, bis der Vorsprung 6 in die Öffnung 7 springt, wodurch die elastische Verformung des Federarms 5 gelöst wird. Die Einführschräge 8' weist vorliegend einen Winkel von ca. 30° zur Wand 8 auf.

Zur Unterstützung der elastischen Verformbarkeit des Federarms 5, insbesondere aber um den Federarm 5 definiert auszulenken, ist am hebelseitigen Ende des Federarms 5 ein zweiter Vorsprung 9 in Form einer senkrecht zur Längserstreckung des Federarms 5 verlaufenden Welle mit im Wesentlichen konstanter Materialdicke ausgebildet. Die Höhe des zweiten Vorsprungs 9 ist hierbei geringer als die des ersten Vorsprungs 6. Vorliegend entspricht die Höhe etwa der Materialdicke des Federarms 5.

Um den Federarm 5 zu schützen und eine Überlastung in Folge eines zu starken Auslenkens zu verhindern, ist eine vorliegend U-förmig ausgebildete Wand 10 um den Federarm 5 außen herum verlaufend ausgebildet, deren Höhe etwa dem Abstand der beiden Wände 8 der Klappe 2 entspricht, und die zumindest in ihrem vorderen Bereich direkt zwischen den Wänden 8 verlaufend angeordnet ist. Über diese U-förmig ausgebildete Wand 10 des Federarms 5 stehen nach außen die beiden Vorsprünge 6 und 9 über. Die Wand 10 ist am hebelseitigen Ende mit dem Ende des Federarms 5 verbunden. Der zweite Vorsprung 9 in Verbindung mit der U-förmig ausgebildeten Wand 10 bildet vorliegend Betätigungsmittel und gleichzeitig eine Überlastungssicherung, um den Federarm 5 elastisch und definiert bis zu einem vorgegebenen Maximum zu biegen.

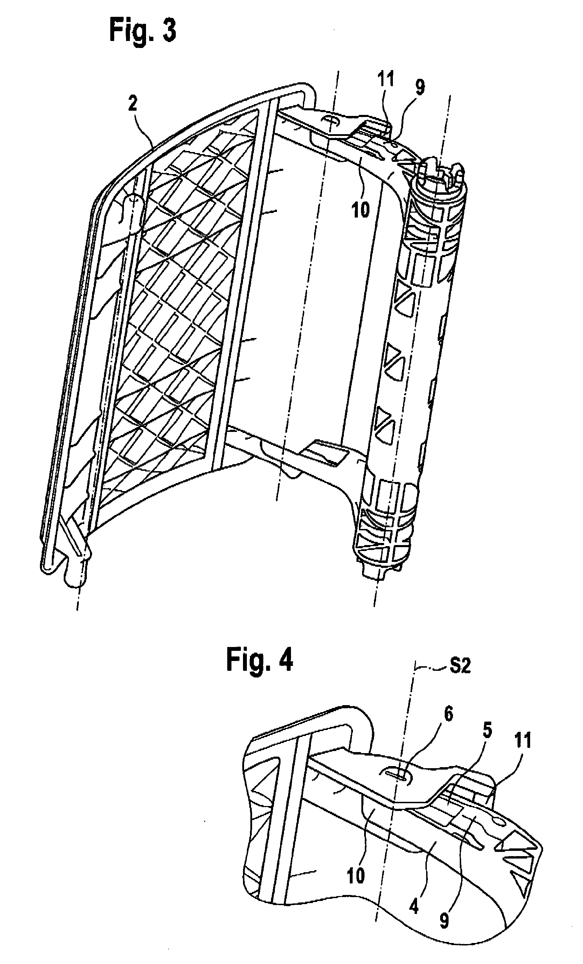

Wie aus Fig. 3 und 4 ersichtlich, ist die Wand 8 mit der Einführschräge 8' in Hebelrichtung seitlich versetzt verlängert ausgebildet, wobei sich auch nach unten weitergeführt und mit der inneren Wand 8 verbunden ist. Hierbei bildet sie eine seitliche Führungsfläche 11 für die Wand 10.

Die Funktion der Gelenkanordnung ist Folgende: zum Zusammenbauen werden die beiden Gelenkteile einander angenähert, wobei zuerst die Wand 10 jedes Hebels 3 in Kontakt mit der entsprechenden Führungsfläche 11 gelangt, so dass die weitere Bewegung seitlich geführt wird. Anschließend gelangt eine der Wände 10, d.h. entweder die der oberen oder der unteren Gelenkanordnung, in Kontakt mit der Einführschräge 8' auf der entsprechenden Seite, so dass eine automatische Führung in Richtung der richtigen Höhe erfolgt.

Nach dem oder im Rahmen des Eindringens des vorderen Endes der Wände 10 zwischen die entsprechenden Wände 8 gelangen die Vorsprünge 6 in Anlage an die entsprechende Einführschräge 8', so dass die Federarme 5 nach innen gebogen werden. Ist die Endposition erreicht, so stoppt die Bewegung automatisch, da die Vorsprünge 6 in die Öffnungen 7 springen, so dass die Clipsverbindungen geschlossen sind.

Zum Lösen der Clipsverbindungen wird gleichzeitig oben und unten auf den jeweiligen zweiten Vorsprung 9 gedrückt - von Hand oder mit Hilfe eines Werkzeugs -, wodurch die Federarme 5 nach innen gebogen werden, so dass die Vorsprünge 6 aus den Öffnungen 7 gelangen. Unter zumindest kurzfristiger Beibehaltung des Drucks werden die Gelenkteile voneinander entfernt. Die U-förmige Wand 10 des Hebels 3 schützt hierbei die Federarme 5 vor einer Überlastung.

Gemäß einer nicht in der Zeichnung dargestellten Variante entfällt die Einführschräge an der äußeren Wand, so dass auch zum Schließen der Clipsverbindungen ein Druck von Hand oder vorzugsweise mit Hilfe eines entsprechenden Werkzeugs auf die zweiten Vorsprünge erforderlich ist, damit die Federarme derart elastisch verformt werden, dass der Vorsprung an der entsprechenden Wand vorbei oder entlang geführt werden kann, bis er in die Öffnung springt.

## Patentansprüche

1. Gelenkanordnung mit zwei um eine Schwenkachse (S2) gegeneinander verschwenkbaren Gelenkteilen, die mit mindestens einer Clipsverbindung miteinander verbunden sind, wobei die Clipsverbindung einen an einem Federarm (5) ausgebildeten Vorsprung (6), der Bestandteil des ersten Gelenkteils ist, und eine Öffnung (7), die Bestandteil des zweiten Gelenkteils ist, aufweist, und die Schwenkachse (S2) durch die Clipsverbindung verläuft, **dadurch gekennzeichnet, dass** am den Federarm (5) mit Vorsprung (6) ein Betätigungsmittel vorgesehen ist, über das der Federarm (5) elastisch und definiert bis zu einem Maximum verformbar ist.

2. Gelenkanordnung nach Anspruch 1, **dadurch gekennzeichnet, dass** das Betätigungsmittel durch einen zweiten Vorsprung (9) gebildet ist.

3. Gelenkanordnung nach Anspruch 2, **dadurch gekennzeichnet, dass** der zweite Vorsprung (9) in die gleiche Richtung wie der erste Vorsprung (6) vorsteht.

4. Gelenkanordnung nach einem der vorhergehenden Ansprüche, **dadurch gekennzeichnet, dass** der zweite Vorsprung (9) durch eine Welle oder Sicke mit im Wesentlichen konstanter oder verringerter Materialdicke als in den benachbarten Bereichen des Federarms (5) gebildet ist.

5. Gelenkanordnung nach einem der vorhergehenden Ansprüche, **dadurch gekennzeichnet, dass** eine Überlastungssicherung zum Verhindern einer Überlastung des Federarms (5) vorgesehen ist.

6. Gelenkanordnung nach Anspruch 5, **dadurch gekennzeichnet, dass** die Überlastungssicherung durch einen neben dem Federarm (5) angeordneten Bereich gebildet ist, der während einer Betätigung des Betätigungsmittels nicht oder nur unwesentlich verformt wird.

7. Gelenkanordnung nach Anspruch 5 oder 6, **dadurch gekennzeichnet, dass** die Überlastungssicherung durch eine Wand (10) gebildet ist, die in einer Ebene um den Federarm (5) außen herum verlaufend ausgebildet ist.

8. Gelenkanordnung nach einem der vorhergehenden Ansprüche, **dadurch gekennzeichnet, dass** auf zumindest einer Seite des Federarms (5) der Clipsverbindung eine Wand (10) am gleichen Gelenkteil ausgebildet ist, welche über einen wesentlichen Teil der Länge des Federarms (5) parallel zum Federarm (5) verläuft, wobei der Vorsprung (6) in Eingriffsrichtung über die Wand (10) hinausragt.

9. Gelenkanordnung nach Anspruch 8, **dadurch gekennzeichnet, dass** am Federarm (5), auf der gleichen Seite und beabstandet vom Vorsprung (6) der Clipsverbindung ein zweiter Vorsprung (9) ausgebildet ist, der über die Wand (10) hinausragt.

10. Gelenkanordnung nach Anspruch 8 oder 9, **dadurch gekennzeichnet, dass** beidseitig des Federarms eine Wand (10) angeordnet ist und die beiden Wände (10) den Federarm (5) vor einer Überlastung zu schützen.

11. Gelenkanordnung nach Anspruch 10, **dadurch gekennzeichnet, dass** die beiden Wände (10) im Bereich ihrer Enden miteinander verbunden sind, insbesondere U-förmig miteinander verbunden sind, und die Schwenkachse (S2) der Gelenkanordnung durch einen von den Wänden (10) umschlossenen Bereich verläuft.

12. Gelenkanordnung nach einem der Ansprüche 9 bis 11, **dadurch gekennzeichnet, dass** die Wand (10) eine konstante Breite und Dicke aufweist.

13. Gelenkanordnung nach einem der vorhergehenden Ansprüche, **dadurch gekennzeichnet, dass** in Zusammenbaurichtung vor der Öffnung (7) eine Einführschräge (8') ausgebildet ist.

14. Gelenkanordnung nach Anspruch 13, **dadurch gekennzeichnet, dass** die Öffnung (7) in einer Wand (8) ausgebildet ist, deren Ende die Einführschräge (8') bildet, und dass der Wand (8) gegenüberliegend eine zweite Wand (8) ausgebildet ist, die zumindest bereichsweise parallel zur ersten Wand (8) mit der Einführschräge (8') verläuft.

15. Gelenkanordnung nach Anspruch 13 oder 14, **dadurch gekennzeichnet, dass** die Einführschräge (8') einen Winkel von 10° bis 45°, insbesondere von 30°, zur Wand (8) aufweist.

16. Gelenkanordnung nach einem der Ansprüche 13 bis 15, **dadurch gekennzeichnet, dass** die Einführschräge (8') so lang ausgebildet ist, dass ihr Ende über den Vorsprung (6) hinausragt, und dass die Wand (8), an der die Einführschräge (8') ausgebildet ist, eine seitliche Führungsfläche (11) bildet.

17. Gelenkanordnung nach einem der vorhergehenden Ansprüche, **dadurch gekennzeichnet, dass** der erste Vorsprung (6) als zylindrischer Zapfen ausgebildet ist.

18. Gelenkanordnung nach einem der vorhergehenden Ansprüche, **dadurch gekennzeichnet, dass** mindestens zwei Clipsverbindungen vorgesehen sind, durch welche die Schwenkachse (S2) verläuft.

19. Gelenkanordnung nach Anspruch 18, **dadurch gekennzeichnet, dass** die Clipsverbindungen spiegelbildlich bezüglich der Mittelquerebene ausgebildet sind, die senkrecht zur Schwenkachse (S2) angeordnet ist.

20. Gelenkanordnung nach einem der vorhergehenden Ansprüche, **dadurch gekennzeichnet, dass** die Gelenkanordnung durch zwei Kunststoff-Spritzgussteile gebildet ist.

21. Gelenkanordnung nach einem der vorhergehenden Ansprüche, **dadurch gekennzeichnet, dass** ein Gelenkteil eine Klappe (2), insbesondere für eine Heizungs- und/oder Klimaanlage, und das andere Gelenkteil ein Hebelarm (4) eines Hebels (3) ist, an welchem der Federarm (5) ausgebildet ist.
